# EUROPÄISCHE PATENTANMELDUNG

(11) **EP 0 676 128 A1**
(43) Veröffentlichungstag der Anmeldung: **11.10.1995**
(21) Anmeldenummer: 95105309.9
(22) Anmeldetag: 07.04.1995
(51) Int. Cl.: A01D 34/70, E01H 1/04

(54) **Sammeleinrichtung für Gras, Laub, Schmutz mit integriertem Gebläse und Hochentleerung**

(30) Priorität: 11.04.1994 DE 9405833 U
(71) Anmelder: MOHR, Hermann, D-91792 Ellingen (DE)
(72) Erfinder: MOHR, Hermann, D-91792 Ellingen (DE)

(57) **Zusammenfassung**

Vorrichtung zum Aufsammeln von Gras, Laub, Schmutz oder sonstigen Stoffen in einen Behälter (2), der im hinteren Teil des Tragrahmens (9) eine einarmige Vorrichtung zum Anheben und Entleeren des Sammelbehälters enthält, wobei der Tragrahmen an die Dreipunkt eines Schleppers angesteckt wird und gleichzeitig an dem Tragrahmen Laufräder (6) lose mit einem Steckteil (8), welches auch durch andere Bauteile austauschbar ist angesteckt wird und der Sammelbehälter mit Hilfe eines Hydraulikzylinders (10), der am hinteren Teil des Tragrahmens montiert ist angehoben und in einer Drehbewegung entleert wird, so daß der im hinteren Teil des Tragrahmens befindliche Teleskoparm (3) mit Hilfe eines Teleskopzylinders über den Drehpunkt (30) geschwenkt wird um mit Hilfe einer besonderen Arretiereinrichtung (16) immer im gleichen Arbeitstakt zurück in seine Ausgangsstellung schwenkt.

## Beschreibung

Die Erfindung betrifft ein Vorrichtung zum Aufsammeln von Gras, Laub, Schmutz oder sonstigen in der Reinigung und Landschaftspflege anfallenden Stoffe in einen Behälter, dadurch gekennzeichnet, daß der Behälter über eine einarmige Vorrichtung mit einem Teleskopzylinder über die hintere Kante gekippt wird, so daß eine Kompakteinheit in einfachster Bauweise entsteht, die bei Ihrer Einfachheit dennoch die Möglichkeit bietet das eingesammelte Gut auf Anhänger, Ladeflächen von LKWs und sonstigen Transporteinrichtungen über zu laden.

Gras, Laub, Schmutzsammeleinrichtungen sind in vielgestaltiger Form bekannt und auch in verschiedenen Ausführungen patentiert. Neu an dieser Erfindung ist, der ungewöhnlich geringe Materialeinsatz mit voller Funktionsfähigkeit und großer Effizienz im Einsatz sowie die Neugestaltung und Anordnung der Bauteile.

Dies wird im besonderen dadurch erreicht, daß bei der Konstruktion auf geringes Eigengewicht und einer technischen Gestaltung wert gelegt wurde, die in seiner Gesamtheit zu einem völlig neuen Gerätetyp geführt haben. Der wie oben schon angeführt mit geringem Materialeinsatz volle Funktionsfähigkeit gewährleistet.

Besonders hervorzuheben ist, der einfache Rahmenbau, der weitgehenst das an Schleppern serienmäßig vorhandene Dreipunktgestänge nutzt, in dem die Rahmenrohre nicht als vollständiger Kasten mit eigener Tragfähigkeit ausgebildet sind, sondern es handelt sich um eine offene Rahmenbauweise, deren mittragender Teil die Unterlenker des Dreipunktgestänges sind.

Eine weitere technische Neuheit ist der im Heck angebrachte Hubmechanismus, der in der Mitte des Rahmens am hinteren Teil des Behälters etwa mittig angeordnet ist, und durch ein einfaches System große Überladehöhen erreicht.

Eine weitere technische Neuerung ist die Möglichkeit des vielfälltigen Einsatzes - der Gestalt, daß die Erfindung so ausgeführt ist, daß das Fahrwerk des Gras- und Laubsammelbehälters in Einzelteile getrennt wurde und abnehmbar ist. Das bietet den Vorzug daß die Tragräder gegen verschieden Bauteile insbesondere durch ein Abstellgestell durch größere Räder durch eine Laufwalze oder durch sonstiges Arbeitsgerät zum Beispiel Kehrmaschine, Schlitzgerät usw. ersetzt werden können.

Die großvolumige Abdeckhaube des Behälters ist so konstrukiert, daß sie beim Entleeren des Behälters in einer bestimmten Neigung mit Unterstützung von Gasdruckfedern automatisch geöffnet wird. Beim Absenken des Behälters in Arbeitsstellung schließt sich die Abdeckhaube ebenfalls mit Gasfederunterstützung ab einem bestimmten Neigungswinkel selbsttätig,-der Gestalt- daß der Schließvorgang ruckartig erfolgt. Das bringt den große Vorteil, daß die in der Abdeckhaube befindlichen Luftgitter beim Verschließen der Abdeckhaube automatisch gereinigt werden. Das bisherige lästige zeitaufwendige Reinigen der Lüftungsgitter ist nicht mehr erforderlich .

Der Sammelbehälter bzw. die Sammeleinrichtung wird in Verbindung mit einem Gebläse betrieben. Durch den Luftstrom gelangt das Sammelgut (meistens durch den Mäher geschnittenes Gras, Laub, oder sonstige herumliegende Abfälle) über den Transportschlauch in den Sammelbehälter.

Weitere Einzelheiten, Merkmale und Vorteile im Rahmen des Erfinderkomplexes ergeben sich aus der nachfolgenden Beschreibung bevorzugter erfindungsmäßiger Ausführungsbeispiele sowie anhand der Zeichnungen. Diese zeigen in:

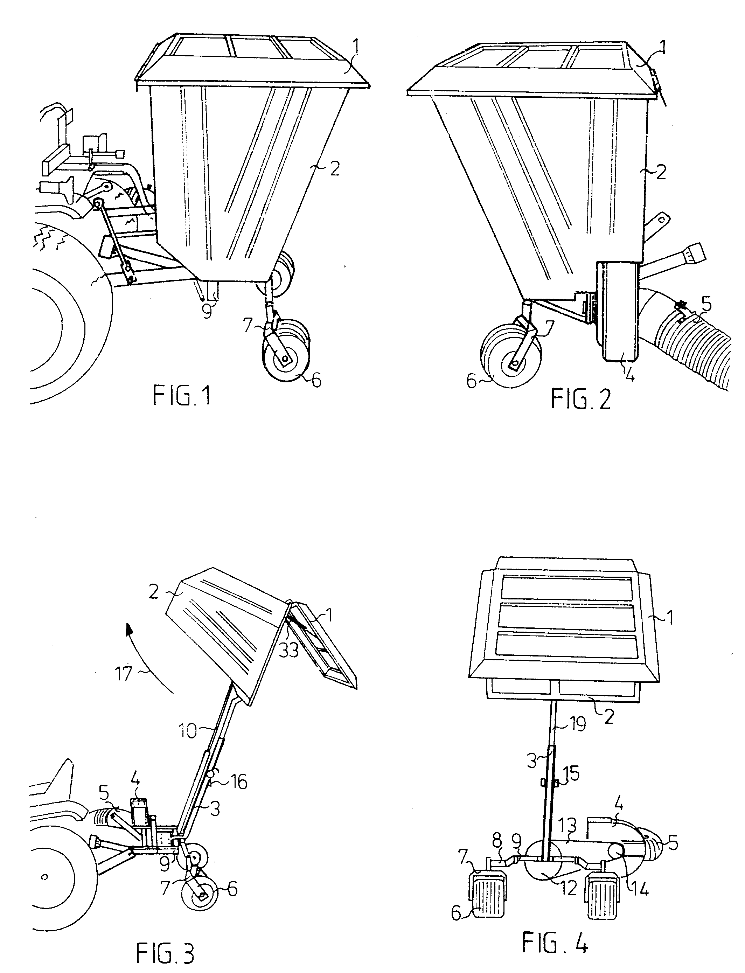

- Fig. 1: Heckpartie eines Rasentraktors mit in der Dreipunkt angebautem Sammelbehälter. In Fahrtrichtung gesehen links dargestellt.
- Fig. 2: zeigt den kompletten Grassammelbehälter in Arbeitsstellung vom Traktor abgekoppelt in Fahrtrichtung gesehen rechts.
- Fig. 3: zeigt die Heckpartie des Traktors mit angekuppelten Gras-Laub-Sammelgerät, der Behälter ausgehoben in Entleeerungsstellung, in Fahrtrichtung gesehen links, mit geöffneter Abdeckhaube.
- Fig. 4: zeigt den Gras-Laub-Sammelbehälter von hinten, abgekuppelt von der Dreipunkt des Traktors, ausgehoben in Entleerungsstellung.

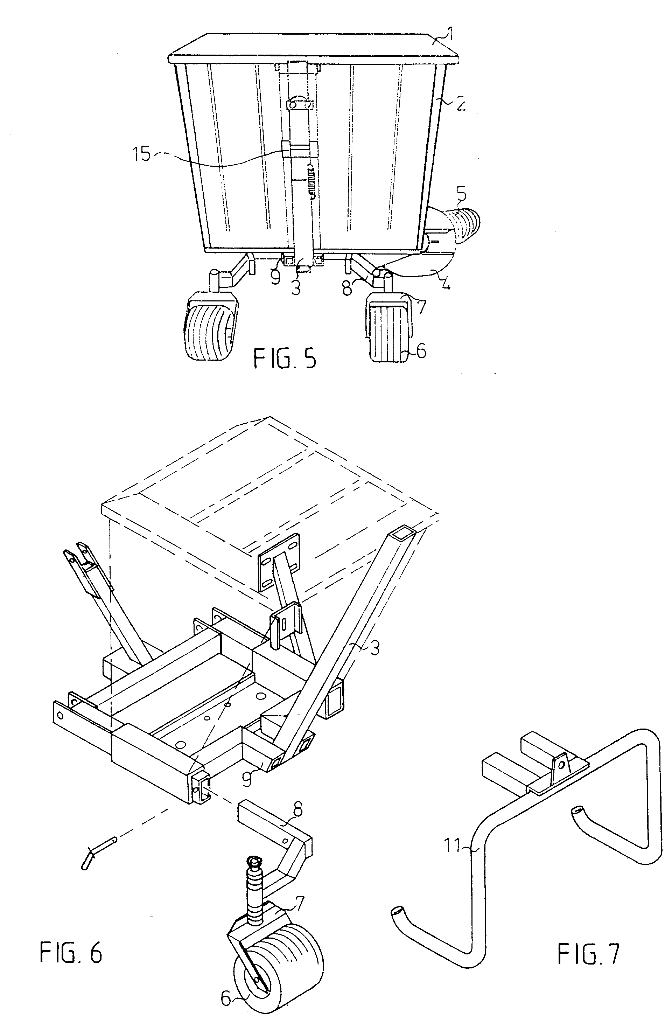

- Fig. 5: zeigt den Gras-Laub-Sammelbehälter von hinten abgesenkt in Arbeitsstellung.
- Fig. 6: zeigt die Rahmen-Konstruktion mit dem geringen technischen Aufwand, durch die Einschiebemöglichkeit des Rahmens in die Dreipunkt des Zug bzw. Trägerfahrzeugs. Außerdem sind die abnehmbaren Laufräder als Einzelteile dargestellt, die wie Eingangs schon beschrieben durch andere Bauteile ersetzt werden können.
- Fig. 7: zeigt ein Abstellgestell für den abgekuppelten Sammelbehälter wahlweise anstatt der im Einsatz normal montierten Räder.

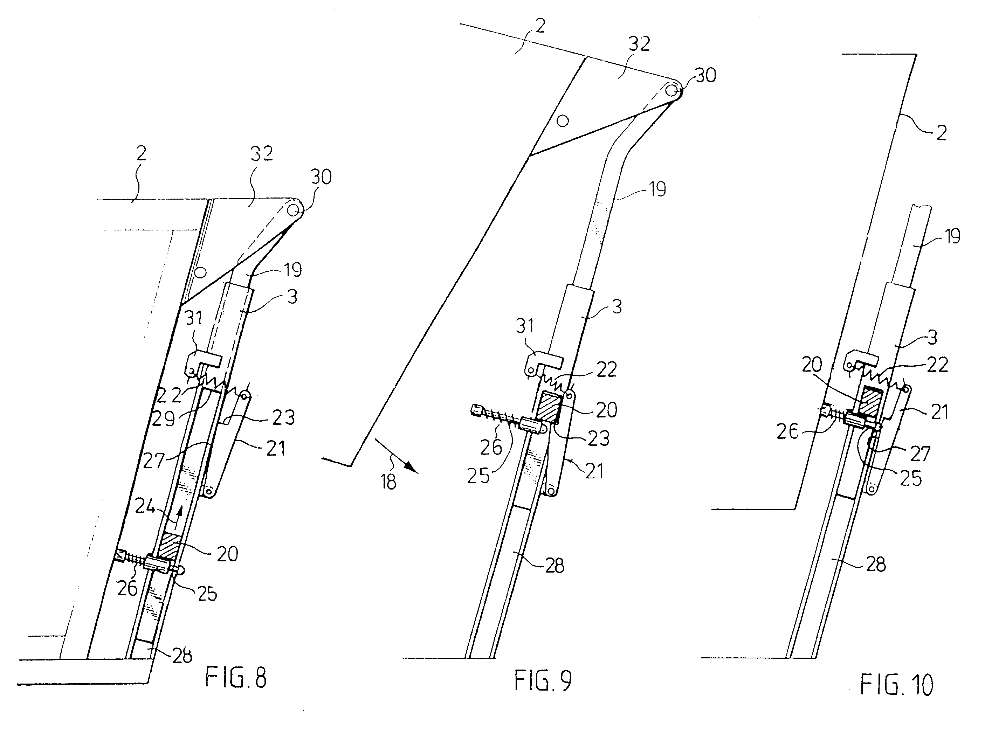

- Fig. 8: zeigt die Aushebevorrichtung ca. mittig im hinteren Teil des Sammelbehälters angebracht, eingefahren mit den Funktionselementen.
- Fig. 9: zeigt die Aushebevorrichtung im ausgefahrenen Zustand wobei der Behälter gerade in Arbeitsstellung versetzt wird.
- Fig. 10: zeigt den Behälter wie er gerade in Entleerungsstellung ausgefahren wird.

## Patentansprüche

1. Vorrichtung zum Aufsammeln von Gras, Laub, Schmutz oder sonstigen in der Landschaftspflege anfallenden Stoffe in einen Behälter (2) dadurch gekennzeichnet, daß im hinteren Teil des Tragrahmens (9) eine einarmige Vorrichtung (3) montiert ist, die den Sammelbehälter (2) anhebt und zum Entleeren (17) über diese Vorrichtung (3) dreht und entleert.

2. Vorrichtung nach Anspruch 1 dadurch gekennzeichnet, daß der Tragrahmen (9) des Behälters (2) an die Dreipunkt eines Schleppers angesteckt wird.

3. Vorrichtung nach Anspruch 1 dadurch gekennzeichnet, daß der Tragrahmen (9) mit Laufrädern (6) versehen ist, die durch ein Steckteil (8) lose mit dem Rahmen (9) verbunden sind. Das Steckteil (8) in Verbindung mit der Laufradgabel (7) und dem Laufrad (6) wahlweise gegen unterschiedliche Bauteile zum Beispiel einem Abstellgestell (11) ausgetauscht werden kann.

4. Vorrichtung nach Anspruch 1 dadurch gekennzeichnet, daß die im hinteren Teil des Tragrahmens (9) montierte Vorrichtung (3) den Sammelbehälter (2) mit Hilfe eines Hydraulikzylinders (10) anhebt um zum Entleeren (17) dreht.

5. Vorrichtung nach Anspruch 1 dadurch gekennzeichnet, daß das in dem Teleskoparm (3) befindliche Teleskoprohr (19) über einen Drehpunkt (30) in Verbindung mit einem Scharnierarm (32) den Behälter (2) mit Hilfe eines Teleskopzylinders (10) über den Drehpunkt (30) schwenkt (17).

6. Vorrichtung nach Anspruch 1 dadurch gekennzeichnet, daß die Arretiereinrichtung (16) aufgrund einer Behälterschwenk-, insbesondere Rückschwenkbewegung (17/18) lösbar ausgebildet ist.

7. Vorrichtung nach Anspruch 1 dadurch gekennzeichnet, daß die Arretiereinrichtung (16) eine am Gestell (3,19,20) stationär angeordnete Raste (21,22,23) und eine mit den Bewegungen (24) des Teleskoprohres (19) gekoppeltes und - oder von einer Behälter-Linear/Schwenkbewegung (24,17,18) betätigbares Ein/Ausrastorgan (25,26) aufweist.

8. Vorrichtung nach Anspruch 1, dadurch gekennzeichnet, daß die Raste (21,22,23) als am Gestell (3,19,20) angelenkter und gegen Federdruck (22) durch das Ein/Ausrastorgan (25,26) auslenkbarer Hebel (21) mit Auflagefläche (23) für ein Teleskoprohr (19) und/oder eine etwaige Verbindungsstrebe (20), und das Ein/Ausrastorgan (25,26) als durch eine Behälterschwenkbewegung (18) betätigbarer Gleit- und Stoßbolzen (Stift) oder Rolle (25) zum Auslenken des Hebels (21) ausgeführt sind.

9. Vorrichtung nach Anspruch 1 gekennzeichnet durch eine Aussparung und/oder Gleitrampe (27) in beziehungsweise auf der Raste (21, 22, 23) zum Einrücken beziehungsweise Gleiten des Ein/Ausrastorgans (25,26).

10. Vorrichtung nach Anspruch 1 gekennzeichnet durch ein federgepuffertes (26) Ein/Ausrastorgan.

11. Vorrichtung nach Anspruch 1 dadurch gekennzeichnet, daß die Abdeckhaube (1) beim Schwenken (17) des Behälters (2) mit Hilfe von Gasdruckfedern (33) automatisch öffnet.

12. Vorrichtung nach Anspruch 1 dadurch gekennzeichnet, daß die Abdeckhaube (1) beim Rücktransport des Behälters (2) in Arbeitsstellung automatisch ruckartig schließt und bei diesem Vorgang die Luftsiebe selbsttätig reinigt.
